# EUROPEAN PATENT APPLICATION

(11) **EP 2 866 151 A1**
(43) Date of publication of application: **29.04.2015**
(21) Application number: 13807203.8
(22) Date of filing: 20.06.2013
(51) Int. Cl.: G06F 15/16

(54) **INFORMATION PROCESSING METHOD AND DEVICE, AND DATA PROCESSING METHOD AND DEVICE USING SAME**

(30) Priority: 20.06.2012 KR 20120066431
(71) Applicant: Hugeflow Co. Ltd., Seoul 121-829 (KR)
(72) Inventor: PARK, Gun Tae, Seoul 140-774 (KR); LEE, Gil Bok, Seoul 121-040 (KR)
(74) Representative: Platzöder, Michael Christian
(86) International application number: PCT/KR2013/005467
(87) International publication number: WO 2013/191494

(57) **Abstract**

The invention concept relates to a mobile computing technique, and more particularly, to a first information processing device, a second information processing device, and a system and a method for processing data therebetween. The first information processing device includes a display unit; and a control unit controlling the display unit to display a device call signal including color information displayed at a part of or the entire display unit and being connected to a first network, wherein, in response to the device call signal recognized as another information processing device connected to a second network same as or different from the first network and including an optical sensor module for receiving the device call signal contacts the display unit, the information processing device transmits a response signal via the second network and, when the information processing device is mapped to the other information processing device, the information processing device carries out a command based on the response signal.

## Description

### TECHNICAL FIELD

The present invention relates to data processing technique, and more particularly, to an information processing apparatus, and a data processing method and apparatus between two or more information processing apparatus.

### BACKGROUND ART

In the current wireless communication market, application market is significantly vitalized due to spread of wireless terminals, such as smart phones. Terminals with wireless communication capability expand from mobile phones, e.g., smart phones, to mobile computing devices, such as net-books, tablet PCs, and e-book terminals. Based on the expansion, markets for new services and applications are created, thereby providing large numbers of services and applications.

Computing devices are evolving from conventional systems which are categorized as desktop PCs and laptop PCs to various network-based systems including ubiquitous and clouding computers. Furthermore, along with improved mobility and miniaturization based on high integration and high capacity of central processing units and storage devices and development of networking technologies, computing devices are expanding to all applied devices with central processing units and storage devices. Furthermore, development of user-convenient interworking techniques for performing a task or exchanging and/or sharing information between different devices, e.g., between a designated computing device like a desktop PC and a mobile device like a smart phone, and various services using the techniques are demanded.

Generally, in a data communication between devices that become access points on a network, mutual recognition and data transmission require a connection via a wire or a wireless connection. Generally, such a process requires manual operation of a user at the level of an operating system or it is necessary to deal with hardware resources like physical ports. For example, in case of a connection between a computing device and a mobile device via a wire, manufacturers of mobile devices employ different connection formats and form factors, respectively. Therefore, for physical connection between a computing device and a mobile device, it may be necessary to arrange ports or adaptors corresponding to various formats or a number of devices to be connected may be restricted by a number of the ports. In case of a wireless connection, it may be necessary for a user to select and set up a wireless network for each device or there may be network restrictions to connect to a single LAN.

### DISCLOSURE OF THE INVENTION

### TECHNICAL PROBLEM

The present invention provides an information processing device that may be easily linked to another information processing device and move data.

The present invention also provides a method and a system for processing information capable of providing various services and user-convenient visual techniques regarding mutual connection and data communication between two or more different information processing device.

The present invention also provides a method and a system for processing information capable of being easily linking two or more different information processing devices in a system for exchanging and/or sharing data therebetween.

### TECHNICAL SOLUTION

According to an aspect of the present invention, there is provided an information processing device including a display unit; and a control unit controlling the display unit to display a device call signal including color information displayed at a part of or the entire display unit and being connected to a first network, wherein, in response to the device call signal recognized as another information processing device connected to a second network same as or different from the first network and including an optical sensor module for receiving the device call signal contacts the display unit, the information processing device transmits a response signal via the second network and, when the information processing device is mapped to the other information processing device, the information processing device carries out a command based on the response signal.

The command based on the response signal includes at least one from among transmission/reception, forwarding, exchange, and sharing of electronic data between the information processing device and the other second information processing device; trading; making payment; web linking; authentication; security; electronic currencies; product descriptions; advertisements; games; downloading coupons; parings; authorization managements; opening/closing an entrance door; switching power; adjustment of the brightness of a light, power managements; controlling a motor; command scripts; executing an application to be executed by the information processing device, the other information processing device, or another information processing device; or a combination thereof.

The electronic data includes at least one from among data, messages, images, music, motion pictures, documents, databases, coupons, product descriptions, maps, electronic currencies, product purchase information, payment information, web link information, authentication information, security information, advertisement information, game information, software applications that are groups of arbitrary commands to be executed by the information processing device or the other information processing device, and combinations thereof.

The command based on the response signal is carried out by using a communication protocol including at least one from among hyper text transfer protocol (http), hyper text transfer protocol over secure socket layer (https), and TCP/IP.

The display unit includes at least one of a touch-screen interface and a contactless interface, and the contactless interface includes at least one of a bio-signal sensor and a motion sensor.

Each of the first and second networks is one from among a close-distance wire/wireless communication network, a remote wire/wireless communication network, an internet network, and a mobile communication network.

The color information includes color sequence information including a plurality of sequentially changing colors, and, in the color sequence information, a preceding color and a following color have different contrast ratios.

The device call signal further includes identifier information of the information processing device, and the identifier information includes one from among an internet protocol (IP) address; a media access control (MAC) address; a modem serial number; a serial number of a network device; serial number of a system board; an e-mail address; user identification information (e.g., a passport number of a residence number); a password; a phone number; a location-based information, such as geographic information and communication cell information; a unique device ID (UDID); a hardware model name; characters and/or numbers which has not allowed to repeat or a combination thereof; or unique identification information including information encoded thereof

According to another aspect of the present invention, there is provided an information processing device including an optical sensor module for recognizing a device call signal including color information displayed at a part of or an entire display unit of another information processing device and being connected to a first network, wherein the information processing device recognizes the device call signal displayed by the other information processing device connected to a second network same as or different from the first network via the optical sensor module and transmits a response signal corresponding to the device call signal via the first network, and, when the information processing device is mapped to the other information processing device, the information processing device carries out a command based on the response signal.

The information processing device or the other information processing device is a table an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, a furniture, a window, a wall surface, or a combination thereof.

The command based on the response signal includes at least one from among transmission/reception, forwarding, exchange, and sharing of electronic data between the information processing device and the other second information processing device; trading; making payment; web linking; authentication; security; electronic currencies; product descriptions; advertisements; games; downloading coupons; parings; authorization managements; opening/closing an entrance door; switching power; adjustment of the brightness of a light, power managements; controlling a motor; command scripts; executing an application to be executed by the information processing device, the other information processing device, or another information processing device; or a combination thereof.

The optical sensor module receives the device call signal by approaching to the display area within a focal distance or contacting the display area. The optical sensor module is arranged at at least one between the front surface and the rear surface of the information processing device.

According to another aspect of the present invention, there is provided a data processing system including a first information processing device including a display unit and a control unit controlling the display unit to display a device call signal including color information displayed at a part of or the entire display unit and being connected to a first network; a second information processing device being connected to a first network, including an optical sensor module for recognizing the device call signal, and transmits a response signal via the second network in response to the device call signal recognized by contacting the display unit; and a mapping server linking the first information processing device and the second information processing device on the first and second networks by mapping the device call signal and the response signal to each other, wherein, when the first and second information processing devices are linked by the mapping server, at least one of the first and second information processing devices carry out a follow-up command.

According to another aspect of the present invention, there is provided a data processing method including displaying a device call signal including color information displayed at a part of or the entire display unit of a first information processing device connected to a first network; receiving the device call signal by contacting an optical sensor module CM of a second information processing device connected to a second network same as or different from the first network and transmitting a response signal corresponding to the device call signal via the second network; linking the first information processing device and the second information processing device to each other on the first and second networks by mapping the device call signal and the response signal to each other; and carrying out follow-up commands at the first information processing device and/or the second information processing device based on the response signal.

According to another aspect of the present invention, there is provided a data processing method including displaying a device call signal including color information displayed at a part of or the entire display unit controlled by an information processing device; and transmitting a response signal corresponding to the device call signal recognized as another information processing device including an optical sensor module for receiving the device call signal approaches to or contacts the display unit and, when the information processing device is mapped to the other information processing device based on the device call signal and the response signal, carrying out follow-up commands, wherein the information processing device is connected to a first network, and the other information processing device is connected to a second network same as or different from the first network.

According to another aspect of the present invention, there is provided a data processing method including recognizing a device call signal displayed at a part of or the entire display unit of another information processing device; transmitting a response signal corresponding to the device call signal via a first network; and, when mapped to the other information processing device based on the device call signal and the response signal, carrying out a follow-up command based on the response signal, wherein the other information processing device is connected to a second network same as or different from the first network.

### ADVANTAGEOUS EFFECTS

According to embodiments of the present invention, a device call signal including color information is generated on a display area of a first information processing device, a second information processing device located on the display area receives the device call signal via an optical sensor module and generates a response signal, and a mapping server maps the first information processing device and the second information processing device to each other by using the device call signal and the response signal and linking the first information processing device and the second information processing device to each other on a network. Therefore, mutual access and data communication between two or more information processing devices may be embodied without a particular setup at the level of an operating system or a complex network setup.

Furthermore, as the display area is combined with a touch-screen interface, various user experiences and interfaces for sharing and exchanging data between the first information processing device and the second information processing device via gestures including a drag-and-drop or a touch may be provided.

An authorization may be issued to the linked second information processing device via an authentication command, such that the second information processing device may be used at a particular area. Therefore, conventional data reception devices separately used at different areas may be replaced.

While the present invention has been particularly shown and described with reference to exemplary embodiments thereof, it will be understood by those of ordinary skill in the art that various changes in form and details may be made therein without departing from the spirit and scope of the present invention as defined by the following claims.

### BRIEF DESCRIPTION OF THE DRAWINGS

Hereinafter, embodiments of the present invention will be described in greater detail with reference to the accompanying drawings.
FIGS. 1A and 1B are perspective views of a first information processing device and a second information processing device that are linked to each other on a network, according to an embodiment;
FIG. 2 is a schematic diagram showing a configuration of a mapping system including the first information processing device and the second information processing device according to an embodiment;
FIG. 3 is a concept diagram for describing mapping information managed by a mapping server shown in FIG. 2;
FIG. 4 is a flowchart showing a mapping method in a mapping system according to an embodiment;
FIGS. 5 and 6 are perspective views of a first information processing device and a second information processing device according to other embodiments; and,
FIG. 7 is a diagram showing a computer-readable storage medium according to an embodiment.

### DETAILED DESCRIPTION OF THE INVENTION

The present invention will now be described more fully with reference to the accompanying drawings, in which exemplary embodiments of the invention are shown.

The invention may, however, be embodied in many different forms and should not be construed as being limited to the embodiments set forth herein; rather these embodiments are provided so that this disclosure will be thorough and complete, and will fully convey the concept of the invention to one of ordinary skill in the art. Meanwhile, the terminology used herein is for the purpose of describing particular embodiments only and is not intended to be limiting of exemplary embodiments.

Also, thickness or sizes of layers in the drawings are exaggerated for convenience of explanation and clarity, and the same reference numerals denote the same elements in the drawings. As used herein, the term "and/or" includes any and all combinations of one or more of the associated listed items.

The terminology used herein is for the purpose of describing particular embodiments only and is not intended to be limiting of exemplary embodiments. As used herein, the singular forms "a," "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

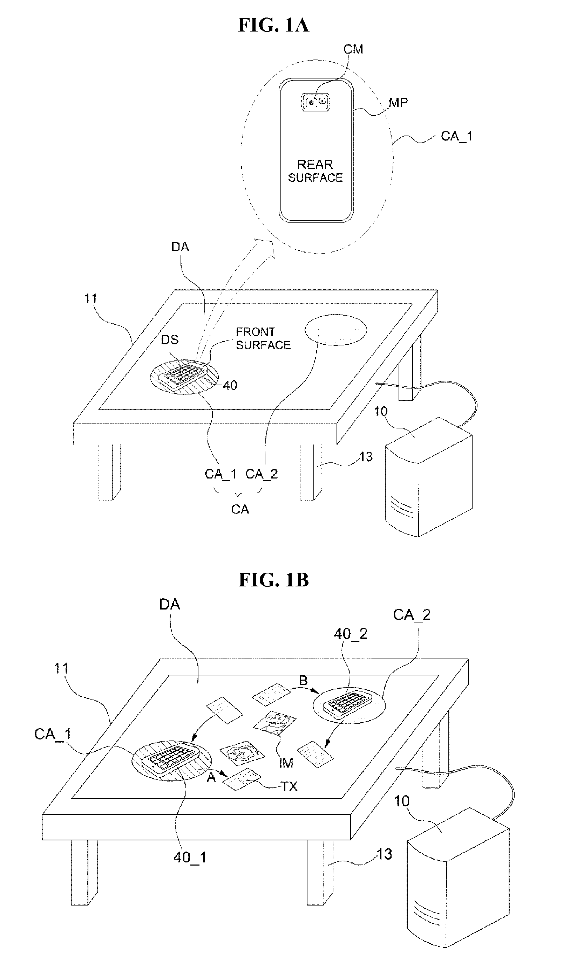

FIG. 1 is a perspective views of a first information processing device 10 and a second information processing device 40 that are linked to each other on a network, according to an embodiment.

Referring to FIG. 1, the first information processing device 10 may include a display unit and a control unit (not shown) that controls the display unit and is connected to a first network. The first information processing device 10 may display information via the display unit 11, which is an output unit of the first information processing device 10, or may control the display unit 11 to recognize a touch event from the display unit 11 and to process data, as described below. The first information processing device 10 may be a smart TV, an advertisement board, a kiosk, a point-of-sales (POS) system, a coupon printer, an exhibition information terminal, a subway ticket machine, a computer, a desktop computer, a tablet PC, a laptop computer, a smart phone, a computer peripheral device, an electronic device, an intelligent home and building control system, an intelligent vehicle information system, an entry security system, an authentication system, and a navigation device. However, it is merely an example, and the inventive concept is not limited thereto. The first information processing device 10 may be an arbitrary suitable computing device including a suitable central processing unit (CPU) or a microprocessor capable of processing instructions requested via a network and a storage device for temporarily and/or permanently storing processed data, such as a memory, a hard disk, a solid state drive (SSD) device, a CD-ROM, and a hologram, and an electronic device including the computing device.

The first information processing device 10 may be a single system existing at a fixed location separated from the display unit 11 as shown in FIG. 1 or a small device attached to the display unit 11. Selectively, the first information processing device 10 is not limited to resources constituting the computing device included in the first information processing device 10 and existing in a single computer system, but may also be a distributed system that the resources are distributed at remote locations.

The display unit 11 may be embodied as a desktop monitor device. However, due to miniaturization, enlargement, and flexibility of display devices, the display unit 11 may also be embodied as visual information display devices of various forms, such as a table, an electronic whiteboard, a signboard, an e-book, a tablet PC, a smart TV, an advertisement board, a kiosk, a coupon printer, a navigation device, a museum information device, a subway ticket machine, a computer, a printer, a refrigerator, an electric range, an induction range, an oven, an air-conditioning system, a smart grid system, a household appliance, an entrance door, an authentication system, a navigation device, or a display unit of an intelligence car system.

Preferably, as shown in FIG. 1, the display unit 11 may have a table-like shape that a user may sit or stand in front of the same to perform an action, such as conferences, works, reading books, eating, drinking, educations, presentations, or games. To this end, the display unit 11 may be parallel to the ground and may include a table supporting base 13 to support the same, such as legs. To this end, the display unit 11 may include a table supporting base 13 to support the same, such as legs. Advantages of such the table-like display unit 11 will become clear according to embodiments below.

The display unit 11 may include a light-emitting display device or, preferably, a non-reflective display device. For example, the display unit 11 may include a passive light-emitting display device, such as a liquid crystal display device, or a self-luminescent device, such as an organic/inorganic light-emitting diode, a cathode ray tube, a plasma display panel, and a vacuum fluorescent display device. However, the above-stated display devices are merely examples, and the inventive concept is not limited thereto. The display unit 11 may include any of various self-luminescent device or passive light-emitting device other than the above-stated devices. As described below, color information regarding the display unit 11 may be recognized when an optical sensor module CM of the second information processing device 40 contacts a surface of a display area DA of the display unit 11. In this case, it is necessary to recognize the color information without an external light, the display unit 11 may be a non-reflective light-emitting display device. The optical sensor module CM is a device for converting a light or information included in a light into electric signals and detecting the electric signals and may preferably be an optical sensor module. However, the inventive concept is not limited thereto.

In the present specification, an approach or a contact of the optical sensor module CM of the second information processing device 40 to a surface of the display unit 11 or the display area DA includes a case in which the optical sensor module CM of the second information processing device 40 is located within a focal distance from the display area DA and may be, preferably, a physical contact that a surface of the optical sensor module CM contacts a surface of the display area DA.

The display unit 11 may include a display area DA on the top surface of the table and may include a touch-screen interface for recognizing a touch event. The touch-screen interface may include a multi-touch interface capable of recognizing a plurality of touch inputs. As it is well-known in the art, the touch-screen interface may be an electrostatic touch-screen interface or a constant-pressure touch-screen interface.

According to another embodiment, the touch-screen interface may be an optical sensor type that optical sensors are arranged in an array shape along a flat surface of the display area DA. For example, when an object is placed on a designated area of the display area DA or a touch event occurs due to a contact of a body part or an action using a stylus pen, optical sensors recognizes a touch based on reduction of amounts of lights incident thereto, and locations of optical sensors that recognize the touch define coordinates of the touch event occurred on the display area DA.

According to another embodiment, light-emitting devices emitting lights across the display area DA are arranged in an array shape at a first side of a perimeter of the display unit 11, and light receiving devices are arranged in an array shape at a second side of the perimeter of the display unit 11 facing the first side at which the light-emitting devices are arranged, thereby embodying an interface for defining location of a touch event based on an amount of light decreased by the touch event. The above-stated touch-screen interfaces are merely examples and may have any of various other configurations known in the art.

The first information processing device 10 defines at least one call area CA at a portion of the display area DA and displays a device call signal at the call area CA. If a plurality of call areas CA are arranged, the plurality of call areas CA may be arranged apart from one another to not to overlap one another, and device call signals allocated to the respective call areas CA may be different from one another. The call area CA may have any of various shapes and sizes, and the present invention is not limited thereto. For example, as shown in FIG. 1, the call area CA may be larger than the second information processing device 40 and may have a circular shape. However, it is merely an example, and the call area CA may have any of various other polygonal shapes, such as an elliptical shape, a rectangular shape, and a pentagonal shape.

According to an embodiment, location of the call area CA may be set in advance. For example, in consideration of a table-like shape of the display unit 11, the call area CA may be set at a location nearby a user's location. For example, if the first information processing device 10 has the shape of a rectangular 4-men table, the call area(s) CA may be arranged at one or a plurality of areas from among four areas of the display area DA (the upper area, the lower area, the left area, and the right area), respectively. FIG. 1 shows a case in which call areas CA_1 and CA_2 are set at the lower-left area and the upper-right area of the display area DA.

According to another embodiment, if the display unit 11 includes the touch-screen interface, no call area may be set in advance. Instead, when the second information processing device 40 is placed or a touch event based on a contact of a finger or a stylus pen occurs at a location in the display area DA, location of the touch event occurred on the display area DA is detected, and a corresponding call area may be generated at the area corresponding to the touch event.

At the call area CA, a device call signal including color information may be displayed. The device call signal may be displayed in the call area CA by filling the entire call area CA. The color information may include a single color or may include a color sequence information that a plurality of colors are sequentially changed. The color information may include chromatic colors, such as red, green, and blue, and/or achromatic colors, such as white, gray, and black. Preferably, the color sequence information may include color sequence information in which chromatic color(s) and achromatic color(s) are partially or entirely alternated. Furthermore, in the color sequence information, a preceding color and a following color may have different contrast ratios. The contrast ratio may be within a range from 1.5 to 107.

First color sequence information may have color information displayed in the order of red, green, and blue, whereas second color sequence information may have color information displayed in the order of yellow, red, and blue, for example. According to another embodiment, in combination of chromatic colors and achromatic colors, the first color sequence information may have color information displayed in the order of red, white, green, white, and blue, whereas the second color sequence information may have color information displayed in the order of yellow, black, red, white, and blue. Sequences and colors of the first and second color sequences are merely examples, and the present invention is not limited thereto. Furthermore, if the color sequence information is repeated, chromatic colors and achromatic colors may be displayed for designated time periods between repeated color sequence information, and thus repetition of the color sequence information may be recognized by a user.

Sequentially changing color sequence information may be seen by a user like if a corresponding call area flickers or color of the call area CA is continuously changing at the display area DA. The overall playback length of the color sequence information and playback lengths of respective colors in the color sequence information may be suitably determined based on color processing speed of the optical sensor module CM of the second information processing device 40 described below. For example, the overall playback length of the color sequence information may be from about 4 seconds to about 10 seconds, whereas playback lengths of respective colors may be from about 0.1 seconds to about 2 seconds. Before termination by a computing device of the first information processing device 10, color sequence information may be repeatedly displayed.

If chromatic colors and achromatic colors are sequentially alternated and/or a preceding color and a following color have different contrast ratios, as described below, when the optical sensor module CM of the second information processing device 40 contacts the display area DA for the optical sensor module CM to recognize the color sequence information via a close-up recognition,differences between contrasts and/or brightness of colors adjacent to each other (one another in a color space become significant, and thus color sequence information may be more efficently recognized. If the device call signal is displayed as the color sequence information, each color may be displayed at a constant interval and, when single color sequence information is completely displayed, the same color sequence information may be repeated.

As described above, when the optical sensor module CM of the second information processing device 40 of the present invention recognizes the color sequence information, changes of colors displayed in a single screen image in a time sequence may be recognized instead of a plurality of color arrangements within a single screen image. Therefore, the optical sensor module CM of the second information processing device 40 may contact the display area DA and recognize the color sequence information.

As shown in FIG. 1, when the first information processing device 10 set two call areas CA, that is, a first call area CA_1 and a second call area CA_2 on the display area DA are predefined, first color sequence information may be displayed at the first call area CA_1, whereas second color sequence information may be displayed at the second call area CA_2. When the first call area CA_1 and the second call area CA_2 are predefined, as first color sequence information and second color sequence information are displayed at the display area DA, a user may intuitively recognize that he or she needs to placed his or her second information processing device 40 on either the first call area CA_1 or the second call area CA_2.

As described above, according to another embodiment, when the second information processing device 40 is placed on an area of the display area DA, e.g., the lower-left corner, a touch-screen interface of the display unit 11 may recognize a touch event based on the second information processing device 40, define a first call area CA_1 at the location that the second information processing device 40 is put, and activate the first call area CA_1, thereby displaying first color sequence information at the first call area CA_1. In the same regard, a second call area CA_2 may be activated as the second information processing device 40 is placed thereon, and second color sequence information may be displayed at the second call area CA_2.

The second information processing device 40 recognizes device call signals displayed at the call areas CA_1 and CA_2 of the display area DA via the optical sensor module CM. The second information processing device 40 may be a small portable mobile communication device that may be easily carried by a user, e.g., a mobile computing device like a mobile phone, a laptop PC, a net book, a tablet PC, an e-book terminal, a smart phone, or a smart pad. Preferably, the second information processing device 40 may be a device having a self-display unit DS at the front surface and the optical sensor module CM at the rear surface. The most popular examples thereof may be mobile devices including a smart phone and a smart pad. However, the inventive concept is not limited thereto. A user may visually confirm execution of an application for a link via the display unit DS of the second information processing device 40 and may be instructed regarding a process related thereto via the display unit DS. As described below, if an application for link may be executed, a link may be established between the first information processing device 10 and the second information processing device 40 regardless of an operating system or a manufacturer of the second information processing device 40. Furthermore, the optical sensor module CM may be arranged at at least one between the front surface and the rear surface of the second information processing device 40.

The optical sensor CM or the optical sensor module CM of the second information processing device 40 may include a lens, an aperture, and a charge-coupled device (CCD), which is an image pickup device, or a CMOS image sensor (CIS), which is an optical sensor semiconductor device. Furthermore, the second information processing device 40 may further include an analog-digital converter (ADC) for converting optical analog signals detected by the optical sensor module CM into digital signals, a memory for storing converted image files, and various physical/electronic filters for improving image pickup sensitivity and/or color recognition efficiency.

In the specification, the first information processing apparatus and the second information processing apparatus may have a relationship as main-subsidiary, master-slave, server-client, or equal footing. However, it is merely an example, and the inventive concept is not limited thereto. For example, the first information processing apparatus is a client apparatus and the second information apparatus is a server apparatus. In addition, the first or second information processing apparatus may be not only a master role but also a slave role, and the first or second information processing apparatus may be not only a server role but also a client role. Therefore, the main-subsidiary, master-slave, server-client relationship may be interpreted as means being compatibility and equivalent relationship, and the present invention is not limited thereto.

FIGS. 1A and 1B are perspective views of a first information processing device 10 and a second information processing device 40 that are linked to each other on a network, according to an embodiment.

Referring to FIG. 1A, the first information processing device 10 may include a display unit 11 and a control unit (not shown) that controls the display unit 11 and is connected to a first network. The first information processing device 10 may display information via the display unit 11, which is an output unit of the first information processing device 10, or may control the display unit 11 to recognize a touch event from the display unit 11 and to process data or carry out an instruction, as described below. The first information processing device 10 may be a table including the display unit 11, an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, a furniture, a window, a wall surface, or a combination thereof. However, it is merely an example, and the inventive concept is not limited thereto. The first information processing device 10 may be an arbitrary suitable computing device including a suitable central processing unit (CPU) or a microprocessor capable of processing instructions requested via a network and a storage device for temporarily and/or permanently storing processed data, such as a memory, a hard disk, a solid state drive (SSD) device, a CD-ROM, and a hologram, and an electronic device including the computing device.

The first information processing device 10 may be a single system existing at a fixed location separated from the display unit 11 as shown in FIG. 1 or a small device attached to or integrated with the display unit 11. The first information processing device 10 is not limited to resources constituting the computing device included in the first information processing device 10 and existing in a single computer system, but may also be a distributed system that at least some of the resources are distributed at remote locations.

Due to miniaturization, enlargement, and flexibility of display devices, the display unit 11 may be not only embodied as a stereotype monitor device, but also be embodied as visual information display devices of various forms, such as a table, an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, or a display unit for a furniture, a window, or a wall surface.

According to an embodiment, as shown in FIG. 1A, the display unit 11 may have a table-like shape that a user may sit or stand in front of the same to perform an action, such as conferences, works, reading books, eating, drinking, educations, presentations, explanation, or games. Advantages of such the table-like display unit 11 will become clear according to embodiments below.

The display unit 11 may include a light-emitting display device or a non-reflective display device. For example, the display unit 11 may include a passive light-emitting display device, such as a liquid crystal display device, or a self-luminescent device, such as an organic/inorganic light-emitting diode, a cathode ray tube, a plasma display panel, and a vacuum fluorescent display device. However, the above-stated display devices are merely examples, and the inventive concept is not limited thereto. The display unit 11 may include any of various self-luminescent device or passive light-emitting device other than the above-stated devices as the light-emitting display device. As described below, color information regarding the display unit 11 may be recognized when an optical sensor module CM of the second information processing device 40 is within a focal distance from a surface of the display unit 11 or physically contacts a surface of a display area DA of the display unit 11. Detailed descriptions thereof will be given below. In this case, it is necessary to recognize the color information with insufficiency or absence of an external light, the display unit 11 may be a non-reflective light-emitting display device.

The display unit 11 may include a display area DA. According to embodiments, the display unit 11 may include a touch-screen interface for recognizing a touch event of a user that occurs at at least a portion of the display area DA. The touch-screen interface may include a multi-touch interface capable of recognizing a plurality of touch inputs. As it is well-known in the art, the touch-screen interface may be an electrostatic touch-screen interface or a constant-pressure touch-screen interface.

According to another embodiment, the touch-screen interface may be an optical sensor type that optical sensors are arranged in an array shape along a flat surface of the display area DA. For example, when an object is placed on a designated area of the display area DA or a touch event occurs due to a contact of a body part or an action using a stylus pen, optical sensors recognizes a touch based on reduction of amounts of lights incident thereto, and locations of optical sensors that recognize the touch define coordinates of the touch event occurred on the display area DA. Examples of commercialized touch-screen interfaces may include PixelsenseTM of the Microsoft or SUR40TM of Samsung.

According to another embodiment, light-emitting devices emitting lights across the display area DA are arranged in an array shape at a first side of a perimeter of the display unit 11, and light receiving devices are arranged in an array shape at a second side of the perimeter of the display unit 11 facing the first side at which the light-emitting devices are arranged, thereby embodying an interface for defining location of a touch event based on an amount of light decreased by the touch event. The above-stated touch-screen interfaces are merely examples, and a contactless configuration other than touch-screen interfaces, such as a motion sensor (e.g., KINECTTM of the Microsoft) or bio-signal sensors based on brain wave, an iris, a body temperature, or a heartbeat pulse may also be employed.

The first information processing device 10 defines at least one call area CA at a portion of the display area DA and displays a device call signal at the call area CA. If a plurality of call areas CA are arranged, the plurality of call areas CA may be arranged apart from one another to not to overlap one another, and device call signals allocated to the respective call areas CA may be different from one another. The call area CA may have any of various shapes and sizes, and the present invention is not limited thereto. For example, as shown in FIG. 1A, the call area CA may have a circular shape. However, it is merely an example, and the call area CA may have any of various other polygonal shapes, such as an elliptical shape, a rectangular shape, and a pentagonal shape. According to embodiments, the call area CA may be larger than an optical sensor module CM of the second information processing device 40 or the second information processing device 40.

According to an embodiment, location of the call area CA may be set in advance. For example, in consideration of a table-like shape of the display unit 11, the call area CA may be set at a location nearby a user's location. For example, if the first information processing device 10 has the shape of a rectangular 4-men table, the call area(s) CA may be arranged at one or a plurality of areas from among four areas of the display area DA (the upper area, the lower area, the left area, and the right area), respectively. FIG. 1A shows a case in which call areas CA_1 and CA_2 are set at the lower-left area and the upper-right area of the display area DA.

According to another embodiment, if the display unit 11 has a separate input interface like the touch-screen interface, no call area CA may be set in advance. Instead, when the second information processing device 40 is placed or a touch event based on a contact of a finger, a stylus pen, or a product occurs at a location in the display area DA, location of the touch event occurred on the display area DA is detected, and a corresponding call area may be generated at the area corresponding to the touch event. In case of a contactless motion recognition, a corresponding call area may be generated based on a defined location or a recognized motion.

At the call area CA, a device call signal including color information may be displayed. The device call signal may be displayed in the call area CA by filling the entire call area CA. The color information may include a single color or may include a color sequence information that a plurality of colors are sequentially changed. The color information may include chromatic colors, such as red, green, and blue, and/or achromatic colors, such as white, gray, and black. Preferably, the color sequence information may include color sequence information in which chromatic color(s) and achromatic color(s) are partially or entirely alternated. Furthermore, in the color sequence information, a preceding color and a following color may have different contrast ratios. The contrast ratio may be selected from a range from 1.5 to 107.

As shown in FIG. 1A, if there are the plurality of call areas CA_1 and CA_2, first color sequence information displayed at the first call area CA_1 may have color information displayed in the order of red, green, and blue, whereas second color sequence information displayed at the second call area CA_2 may have color information displayed in the order of yellow, red, and blue, for example. According to another embodiment, in combination of chromatic colors and achromatic colors, the first color sequence information may have color information displayed in the order of red, white, green, white, and blue, whereas the second color sequence information may have color information displayed in the order of yellow, black, red, white, and blue. Sequences and colors of the first and second color sequences are merely examples, and the present invention is not limited thereto. Furthermore, if the color sequence information is repeated, chromatic colors and achromatic colors may be displayed for designated time periods between repeated color sequence information, and thus repetition of the color sequence information may be recognized by a user.

Sequentially changing color sequence information may be seen by a user like if a corresponding call area flickers or color of the call area CA is continuously changing at the display area DA. The overall playback length of the color sequence information and playback lengths of respective colors in the color sequence information may be suitably determined based on color recognition sensitivity and processing speed of the optical sensor module CM of the second information processing device 40 described below. For example, the overall playback length of the color sequence information may be from about 4 seconds to about 10 seconds, whereas playback lengths of respective colors may be from about 0.1 seconds to about 2 seconds. Before termination by a computing device of the first information processing device 10, color sequence information may be repeatedly displayed.

If the optical sensor module CM of the second information processing device 40 approaches to the display area DA or contacts the display area DA for the optical sensor module CM to recognize the color sequence information via a close-up recognition, color sequence information in which chromatic colors and achromatic colors are sequentially alternated and/or a preceding color and a following color have different contrast ratios may be more efficiently recognized as differences between contrasts and/or brightness of colors adjacent to each other in a color space become significant. If the device call signal is embodied as the color sequence information, each color may be displayed at a constant interval and, when single color sequence information is completed displayed, the same color sequence information may be repeated.

As described above, when the optical sensor module CM of the second information processing device 40 of the present invention recognizes the color sequence information, colors changed and displayed in a time sequence are not necessarily displayed as a single color at a time throughout the call area CA. For example, sequential changes of a histogram obtained from a pattern consisting of a single or a plurality of colors simultaneously existing in the call area CA or a digitized color, such as an average color displayed.

As shown in FIG. 1A, when the first information processing device 10 generates two call areas CA, that is, a first call area CA_1 and a second call area CA_2 on the display area DA, first color sequence information may be displayed at the first call area CA_1, whereas second color sequence information may be displayed at the second call area CA_2. When the first call area CA_1 and the second call area CA_2 are generated, as the first color sequence information and the second color sequence information are displayed at the display area DA, a user may intuitively recognize that he or she needs to placed his or her second information processing device 40 on either the first call area CA_1 or the second call area CA_2.

As described above, when the second information processing device 40 is placed on an area of the display area DA, e.g., the lower-left corner, a touch-screen interface of the display unit 11 may recognize a touch event based on the second information processing device 40, define a first call area CA_1 at the location that the second information processing device 40 is put, and activate the first call area CA_1, thereby displaying first color sequence information at the first call area CA_1. In the same regard, a second call area CA_2 may be activated as the second information processing device 40 is placed thereon, and second color sequence information may be displayed at the second call area CA_2.

The second information processing device 40 recognizes device call signals displayed at the call areas CA_1 and CA_2 of the display area DA via the optical sensor module CM. The optical sensor module CM may include a lens, an aperture, and a charge-coupled device (CCD), which is an image pickup device, or a CMOS image sensor (CIS), which is an optical sensor semiconductor device. Furthermore, the second information processing device 40 may further include an analog-digital converter (ADC) for converting optical analog signals detected by the optical sensor module CM into digital signals, a memory for storing converted image files, and various physical/electronic filters for improving image pickup sensitivity and/or color recognition efficiency.

The second information processing device 40 including the optical sensor module CM may be a small portable mobile communication device, e.g., a mobile computing device like a mobile phone, a laptop PC, a net-book, a tablet PC, an e-book terminal, a smart phone, or a smart pad, but is not limited thereto. For example, the second information processing device 40 may be a computer peripheral device, such as a printer, a keyboard, a mouse, a laser pointer, an USB memory, and an external storage device, or a device including the optical sensor module CM to be paired with the first information processing device 10 or to be intellectualized based on interaction with the first information processing device 10, such as a remote control device (e.g., a TV remote controller), a key, and a picture frame. The pairing may be established based on a master-slave relationship or an equal level relationship.

The optical sensor module CM may be arranged at various locations based on forms of the second information processing device 40. A smart phone or a tablet PC includes a self-display unit DS at the front surface and the optical sensor module CM at the rear surface. If the optical sensor module CM is arranged at the rear surface of the second information processing device 40 as described above, to recognize a device call signal displayed at the call area CA, a user may let the rear surface of the second information processing device 40 having arranged the optical sensor module CM thereat toward the display area DA, and preferably, bring the rear surface of the second information processing device 40 close to the display area DA within a focal distance or contact the rear surface of the second information processing device 40 to a surface of the display area DA to pick up a close-up image of a device call signal displayed at the display area DA. The arrangement is preferable, because, when the optical sensor module CM is close to the display unit 11 of the first information processing device 10 within a focal distance or the surface of the optical sensor module CM contacts or faces toward the display unit 11 of the first information processing device 10, a user may visually confirm operating state of the second information processing device 40, such as execution of a linking application, via the display unit DS of the second information processing device 40 and be informed about a process related to the operating state of the second information processing device 40 via the display unit DS. On the contrary, if the optical sensor module CM is located at the front surface of the second information processing device 40, a user may let the front surface of the second information processing device 40 to face the display area DA or to bring the front surface of the second information processing device 40 close to the display area DA within a focal distance or contact the front surface of the second information processing device 40 to a surface of the display area DA, such that the second information processing device 40 may recognize a device call signal.

A device call signal is generated at the call area CA of the display area DA, and the second information processing device 40, which is close to or contacts the call area CA, recognizes the device call signal via the optical sensor module CM of the second information processing device 40. Next, the second information processing device 40 generates a response signal corresponding to the device call signal and transmits the response signal via a second network connected to the second information processing device 40, and a mapping server, which is directly or indirectly connected to both a first network and the second network, relays therebetween, and the first information processing device 10 and the second information processing device 40 may be linked to each other.

The second network having connected thereto the second information processing device 40 may be a same type of network as the first network having connected thereto the first information processing device 10 or a different type of network. For example, the first network may be one from among a close-distance wire/wireless communication network, a remote wire/wireless communication network, an internet network, or a mobile communication network, whereas the second network may be another one from among the above-stated networks. As known in the art, the network may include repeaters, such as a hub, a gateway, and a router.

When the first information processing device 10 and the second information processing device 40 are linked to each other, link complete information may be displayed at at least one of the call area CA of the first information processing device 10 and a display unit of the second information processing device 40. Link complete information displayed at the first information processing device 10 may be one from among or a combination of flickers, color changes, animations, or texts displayed at a portion (e.g., edges) of or throughout the call area CA. However, the link complete information is not limited thereto, as long as the link complete information differs from the device call signal.

Referring to FIG. 1B, the first information processing device 10 may be linked to two or more second information processing devices 40_1 and 40_2 using the method as described above with reference to FIG. 1A. Alternatively, the two or more second information processing devices 40_1 and 40_2 may be linked to each other via the first information processing device 10 or directly. Therefore, data of the second information processing device 40_2 contacting a first device call area CA_1 is shared with the first information processing device 10 or moved to the first information processing device 10, and the data shared by or moved to the first information processing device 10 may be shared by or moved to the other second information processing device 40_2 contacting a second device call area CA_2 again.

According to an embodiment, as shown in FIG. 1B, as indicated by an arrow A, when a finger is dragged from the first device call area CA_1 to outside of the first device call area CA_1, electronic data having various formats, such as data, information, command scripts (e.g., HTML), and software application including a group of commands, is processed by the first information processing device 10 and displayed at the display area DA. For example, if a stored data is a document, e.g., an e-mail, a powerpoint file, a word file, etc., and a decoded document TX may be displayed at the display area DA. If a stored data is an image, a decoded image IM may be displayed at the display area DA. Here, a document may be executed on the display area DA and content thereof may be displayed or may become an icon and be displayed with a filename. In case of an image, an original image or a thumbnail image thereof may be displayed at the display area DA. Although not shown, if the stored data is a music or a motion picture, a score and/or a lyric may be displayed at the display area DA and the music or the motion picture may be played back.

When a user drags the data, the information, the command scripts (e.g., HTML), or the software application including a group of commands displayed or executed on the display area DA, to the second device call area CA_2 having arranged there at the other second information processing device 40_2 as indicated by an arrow B, the data, the information, the command scripts (e.g., HTML), or the software application including a group of commands is transmitted to the second information processing device 40_2. Furthermore, when a user performs a dragging gesture from the first device call area CA_1 to the second device call area CA_2, since a link is established between the two second information processing devices 40_1 and 40_2, electronic data may be shared or transmitted therebetween.

The above-stated electronic data of various formats may be pictures, music, documents, databases, coupons, product descriptions, maps, electronic currencies, product purchase information, payment information, web link information, authentication information, security information, software applications that are groups of arbitrary commands to be executed by the first or the other second information processing device, or combinations thereof. Furthermore, according to embodiments, user gestures are not limited to dragging and may be an arbitrary interpretable touch motion or contactless motion suitable for carrying out commands including rotation, magnification, execution, and closure.

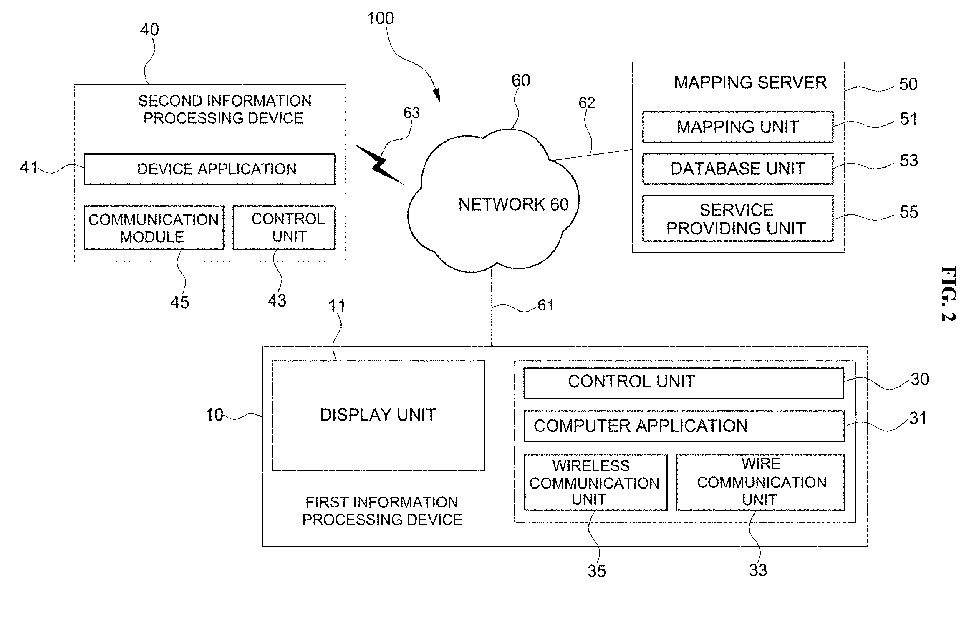

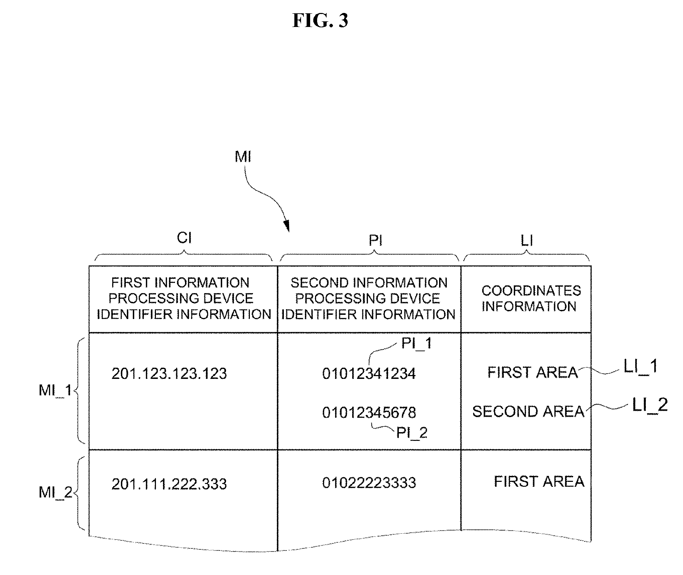

FIG. 2 is a schematic diagram showing a configuration of a mapping system 100 including the first information processing device 10 and the second information processing device 40 according to an embodiment, and FIG. 3 is a concept diagram for describing mapping information managed by a mapping server 50 shown in FIG. 2. Descriptions given above may be referred for components denoted by same reference numerals as the above-stated components, and redundant explanations will be omitted.

Referring to FIG. 2, the mapping system 100 may include the first information processing device 10, the second information processing device 40, and the mapping server 50. FIG. 2 shows an example that the first information processing device 10 and the second information processing device 40 are linked to each other via first and second heterogeneous networks 61 and 62. The first network 61 is a wire network, whereas the second network 62 is a wireless network. A third network 63 to which the mapping server 50 is connected may be a wire network. However, it is merely an example, and the entire network 60 including the first through third networks 61 through 63 may be a single network or may include different types of networks as shown in FIG. 2. The network 60 may be a close-distance wire/wireless communication network, a remote wire/wireless communication network, an internet network, a mobile communication network, a Bluetooth network, a virtual private network (VPN), an inter-device pairing network, a tethering including USB tethering, or a Wi-Fi hot spot. Furthermore, as known in the art, the network may include repeaters, such as a hub, a gateway, and a router.

Furthermore, the first information processing device 10 and the second information processing device 40 may communicate with the mapping server 50 using a same protocol or different protocols via the network 60. For communication using different protocols, the mapping server 50 may include a transcoder unit for relaying protocols of different formats.

The first information processing device 10 may request the mapping server 50 for information regarding a device call signal to be used by the first information processing device 10, receive information regarding the device call signal from the mapping server 50, and may control the display unit 11 to display a device call signal therefrom. As described above with reference to FIG. 1A, the device call signal is a signal including color information to be displayed by the display unit 11 and recognized by the second information processing device 40 via an optical sensor module thereof.

The second information processing device 40 may recognize the device call signal, generate a response signal corresponding to the device call signal, and transmit the response signal to the mapping server 50. Next, the mapping server 50 receives the transmitted response signal, maps information regarding the device call signal of the first information processing device 10 and information included in the response signal of the second information processing device 40, and links the first information processing device 10 and the second information processing device 40 to each other on the network 60.

According to another embodiment, the device call signal may be generated by the first information processing device 10. To this end, the first information processing device 10 may include a library for generating a device call signal, e.g., color sequence information, or request the library for generating a device call signal to the mapping server 50, generate a device call signal by using the same, and display the device call signal via the display unit 11. In this case, the first information processing device 10 may transmit information regarding a device call signal generated by the first information processing device 10 to the mapping server 50.

The first information processing device 10 may request a device call signal to the mapping server 50 and transmit identifier information regarding the first information processing device 10. Alternatively, the first information processing device 10 may generate a device call signal and transmit information regarding the device call signal to the mapping server 50 together with or separate from the identifier information regarding the first information processing device 10.

The identifier information may include unique identification information for recognizing the first information processing device 10 from among a plurality of computers connected to a network. The unique identification information regarding the first information processing device 10 may be one from among an internet protocol (IP) address, a media access control (MAC) address, a modem serial number, a serial number of a network device, a serial number of a system board, an e-mail address, user identification information (e.g., a passport number of a residence number), a password, a phone number, a location-based information, such as geographic information and communication cell information, a unique device ID (UDID), a hardware model name, characters and/or numbers based on a combination thereof or a combination of the characters and the numbers, or information encoded therefrom. According to another embodiment, unique identification information of the first information processing device 10 may be arbitrary characters or numbers obtained by a random number generator that does not allow duplication, a combinations thereof, or information encoded therefrom.

As described above, when identifier information regarding the first information processing device 10 is transmitted to the mapping server 50, the mapping server 50 may store and manage information regarding one or more device call signals and computer identifier information to be used by the first information processing device 10. The information regarding one or more device call signals and the computer identifier information may be stored in a database of the mapping server 50.

The first information processing device 10 may include not only the display unit 11, but also a control unit 30 for controlling the display unit 11, e.g., a CPU or a microprocessor, where an computer application 31 for linking to the second information processing device 40 may be executed on the control unit 30. Furthermore, the first information processing device 10 may include a wire communication unit 33 and a wireless communication unit 35 for communications on a network.

The computer application 31 may control the above-stated components in the first information processing device 10 directly or via an operating system and is a program installed on the first information processing device 10 to transmit and receive information regarding device call signals and mapping information to and from the mapping server 50, perform tasks related to various service provided by the mapping server 50, transmit, receive, forward, exchange, and/or share electronic data with the second information processing device 40, such as messages, information, and/or multimedia contents, and/or perform tasks, such as trade, making payment, web linking, authentication, security, electronic currencies, product instruction, advertisement, game, command scripts, or software application, which is a group of executable commands. The computer application 31 may be downloaded and installed by a user via an application store or the mapping server 50 or may be pre-loaded to the first information processing device 10 when the first information processing device 10 is manufactured.

According to embodiments, the computer application 31 may include a log-in interface and, when the computer application 31 is executed by a user, a log-in operation may be activated and identifier information, such as an ID and a password, of the first information processing device 10 may be transmitted to the mapping server 50 in advance.

The computer application 31 may also provide suitable user interfaces (UI) based on users of the first information processing device 10 and/or the above-stated tasks. For example, as described above with reference to FIG. 1A, if the table-like first information processing device 10 is arranged at a restaurant, the first information processing device 10 may provide information regarding menus offered by the corresponding restaurant. Furthermore, in conjunction with the mapping server 50, the first information processing device 10 may be linked to a pay gate and provide payment service.

The wire communication unit 33 is connected to the network 60, such as an internet network, via a wire LAN connection, for example, and may perform communications with the mapping server 50 via the connected external network. The wireless communication unit 35 may be connected to a close-distance mobile communication network via a wireless connection, such as Wi-Fi or Bluetooth, and communicate with the mapping server 50.

According to another embodiment, the mapping server 50 may be embodied as software and may be included in the first information processing device 10 by using hardware resource of the first information processing device 10. If the mapping server 50 is included in the first information processing device 10, it is not necessary to perform a communication between the first information processing device 10 and the mapping server 50 via a network, and the wireless communication unit 35 and 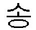 wire communication unit 33 will be used for communications with the second information processing device 40.

As described above, the first information processing device 10 may include a touch-screen interface or a contactless motion recognition input interface for recognizing a touch event occurring at the display area DA. Furthermore, although not shown, the first information processing device 10 may further include other input/output interface unit(s) (not shown) for a user to input commands, such as a keyboard, a mouse, and a printer.

The second information processing device 40 may include a device application 41, a communication module 43, and a control unit 45 for controlling the same. The communication module 43 establishes communications with the mapping server 50 and the first information processing device 10 and may include any of various wireless network communication modules, such as a 3G module, a Bluetooth module, and a Wi-Fi module, and/or other wire network connection module. The control unit 45 may be a CPU or a microprocessor.

The device application 41 is a program installed on the second information processing device 40 to recognize information regarding a device call signal displayed by the first information processing device 10, generate a response signal, and establish a link to the second information processing device 40 by transmitting/receiving mapping information to/from the mapping server 50. Furthermore, the device application 41 may control the above-stated components in the second information processing device 40, e.g., the communication module 43 and an optical sensor module 45, directly or via an operating system, transmit/receive information regarding a device call signal and mapping information to/from the mapping server 50, perform tasks related to various service provided by the mapping server 50, transmit, receive, forward, exchange, and/or share electronic data with the first information processing device 10, such as messages, information, and/or multimedia contents, and/or perform tasks, such as trade, making payment, web linking, authentication, security, electronic currencies, product instruction, advertisement, game, command scripts, or software application, which is a group of executable commands.

The device application 41 may be downloaded and installed by a user via an application store, the first information processing device 10, or the mapping server 50 or may be pre-loaded to the second information processing device 40 when the second information processing device 40 is manufactured.

The device application 41 may interpret color information of an image picked up on the call area CA of the display area DA to recognize the device call signal. For example, color information or an image may include a RGB code or a color space. Generally, in the RGB color space, yellow may be interpreted to a color coordinates (R, G, B)=(255, 255, 0), blue may be interpreted to a color coordinates (R, G, B)=(0, 0, 255), and white may be interpreted to a color coordinates (R, G, B)=(255, 255, 255). The exemplified value "0, 255" indicates color gradation. R and G have greater values than B for yellow, whereas B has a greater value than R and G for blue. Using such algebraic numbers, the device application 41 may extract information regarding a picked up image, that is, a RGB code and, if a device call signal is displayed as color sequence information, timings of color changes and/or time length of the color sequence information.

The device application 41 may transmit the read out color information regarding the image to the mapping server 50 as a response signal to a device call signal. According to another embodiment, the device application 41 may transmit identifier information of the first information processing device 10, which is included in a device call signal and read out therefrom, to the mapping server 50 as a response signal to the device call signal. According to embodiments, if it is necessary for the first information processing device 10 to recognize two or more second information processing devices, the response signal may include not only identifier information of the first information processing device 10, but also information regarding a sequence of the second information processing devices to be recognized.

Furthermore, a response signal regarding the device call signal may include identifier information of the second information processing device 40, and the device application 41 may transmit the identifier information of the second information processing device 40 to the mapping server 50. The identifier information of the second information processing device 40 may include unique identification information for recognizing the second information processing device 40 from among a plurality of computers connected to a network. The unique identification information regarding the second information processing device 40 may be one from among an internet protocol (IP) address, a media access control (MAC) address, a modem serial number, a serial number of a network device, a serial number of a system board, an e-mail address, user identification information (e.g., a passport number of a residence number), a password, a phone number, a location-based information, such as geographic information and communication cell information, a unique device ID (UDID), a hardware model name, characters and/or numbers based on a combination thereof or a combination of the characters and the numbers, or information encoded therefrom. According to another embodiment, unique identification information of the second information processing device 40 may be arbitrary characters or numbers obtained by a random number generator that does not allow duplication, a combination thereof, or information encoded therefrom. However, the inventive concept is not limited thereto.

According to embodiments, the device application 41 may include a log-in interface and, when the device application 41 is executed by a user, a log-in operation may be activated and identifier information, such as an ID and a password, of the second information processing device 40 may be transmitted to the mapping server 50 in advance.

When the mapping server 50 receives the response signal, the mapping server 50 maps the first information processing device 10 and the second information processing device 40 to each other by using the identifier information of the first information processing device 10 and the identifier information of the second information processing device 40 and links the first information processing device 10 and the second information processing device 40 to each other on a network. The response signal may include all of or a part of information included in the device call signal. Selectively, the response signal may further include the identifier information of the second information processing device 40.

According to embodiments, the mapping may be performed during an operation for determining whether information included in a device call signal of the first information processing device 10 is identical to a response signal of the second information processing device 40 generated based on the same. As described above, the mapping server 50 may establish a link between the first information processing device 10 and the second information processing device 40 by mapping information included in a device call signal of the first information processing device 10 to information included in a response signal of the second information processing device 40.

When the mapping is completed, the mapping server 50 may issue an unique ID for a connection event indicating that the first information processing device 10 and the second information processing device 40 are linked to each other. Data processes, such as sharing, forwarding, and trading, may be performed by the mapping server 50 or another server or a cloud system on a network. For example, when the mapping is completed, the first information processing device 10 and the second information processing device 40 may carry out follow-up commands. The follow-up commands may include designated commands, such as at least one from among transmission/reception, forwarding, exchange, and sharing of electronic data between the first information processing device 10 and the second information processing device 40, forwarding, exchanging, sharing, and paring of data including information regarding trading, making payment, web linking, advertisements and games, downloading coupons, payment information, message forwarding, authentication, security, products, works or locations, etc., service authentication that requires authenticated first or second information processing device or authentication of a user of the first or second information processing device, management of authorizations for reading, deleting, modifying, uploading, or downloading data, opening/closing a motor-operated entrance door related to management of the motor-operated entrance door, power management including adjustment of the brightness of a light, and adjustment of the temperature of a range or an oven, and controlling a motor for controlling operation of a machine. However, those are merely examples, and the inventive concept is not limited thereto.

The follow-up command may be transmitted to another system suitable for carrying out the other command by using a communication protocol, such as hyper text transfer protocol (http), hyper text transfer protocol over secure socket layer (https), and TCP/IP. Electronic data for a follow-up command is shared, transmitted, and exchanged by using a suitable communication protocol to prevent a user or a device other than a linked user or a linked device from sharing the corresponding data. According to another embodiment, when mutual IPs are exchanged between the first information processing device 10 and the second information processing device 40 via the mapping server 50, an 1:1 communication may be performed via socket connection, for example. However, the above-stated linking methods are merely examples, and a link between the first information processing device 10 and the second information processing device 40 and services based on the same may extend to a multiple tier design, such as a 2 tier design or a 3 tier design.

FIG. 2 shows the only one second information processing device 40. However, if it is necessary to link two or more second information processing devices to the single first information processing device 10, the first information processing device 10 may generate a plurality of call areas CA respectively corresponding to the plurality of second information processing devices and may request a plurality of different device call signals to be respectively displayed at the corresponding call areas CA to the mapping server 50. The mapping server 50 may generate device call signals different from each other, e.g., color information and/or color sequence information different from each other, and provide the device call signals to the first information processing device 10. According to another embodiment, as described above, the first information processing device 10 may generate a plurality of device call signals to be displayed at a plurality of call areas CA by using an integrated library and may transmit information regarding the generated device call signals and, selectively, identifier information to the mapping server 50. For example, a first color sequence may have the sequence of 'red-green-blue,' and a second color sequence may have the sequence of 'yellow-red-blue,' where the mapping server 50 configures one-to-many mapping information using identifier information of the first information processing device 10 and identifier information of a plurality of second information processing devices 40.

As described above, the mapping server 50 may map and link the first information processing device 10 and the second information processing device 40, which are mapped to each other, on a network. Configured mapping information is stored and managed in a database unit 53 of the mapping server 50, where calculations for mapping may be performed by a mapping unit 51.

Identifier information of the first information processing device 10 and identifier information of the second information processing device 40 may be stored and managed in the database unit 53. The mapping server 50 may map the first information processing device 10 and the second information processing device 40 to each other one-to-one or may map the first information processing device 10 and the second information processing devices 40 to each other one-to-many and store corresponding mapping information in the database unit 53.

The mapping unit 51 may be a combination of software and a hardware information processing device for mapping and linking the first information processing device 10 and the second information processing device 40 to each other. The first information processing device 10 and the second information processing device 40 may be linked to each other via a peer-to-peer (P2P) network, may be connected to the mapping server 50 via a client-server network or a combination of the above-stated networks. Alternatively, as described above, the mapping unit 51 may map the first information processing device 10 and the second information processing device(s) 40 one-to-one or one-to-many.

In some embodiments, the mapping server 50 may store and manage identifier information of the first information processing device 10, the identifier information of the second information processing device 40, and, selectively, location information regarding a call area of a display area DA, e.g., information regarding coordinates on the display area DA, in the database unit 53, thereby mapping the first information processing device 10 and the second information processing device 40 to each other based on the identifier information of the first informatio processing device 10 and the second information processing device 40, and the location information.

The coordinate information may indicate actual coordinates on a 2D plane or codes to be recognized by the first information processing device 10 and the mapping server 50. According to embodiments, the location information may be combined with the device call signal in the form of additional color information, displayed at a corresponding call area, and recognized by an optical sensor module of the second information processing device 40.

The mapping unit 51 may map the identifier information of the first information processing device 10, the identifier information of the second information processing device 40, and, selectively, the coordinate information to each other (one another), and store mapping information in the database unit 53. The mapping information is basically stored in and managed by the mapping server 50, where a part for the mapping information may be selectively shared by another computing device constituting a corresponding network, if necessary.

For example, as shown in FIG. 3, mapping information MI may include a plurality of pieces of mapping information MI_1 and MI_2, where each mapping information may include identifier information CI of the first information processing device 10, identifier information PI of the second information processing device 40, and, selectively, coordinates information LI. The first mapping information MI_1 relates to a case in which the two second information processing devices 40 are mapped to the single first information processing device 10, whereas the second mapping information MI_2 relates to a case in which the single second information processing device 40 is mapped to the single first information processing device 10. The identifier information CI of the first information processing device 10 exemplifies an IP address allocated to the first information processing device 10 and the identifier information PI of the second information processing device 40 exemplifies a phone number, and the coordinate information may consist of XY coordinates or area names. For example, the first mapping information MI_1 consists of the identifier information CI of the first information processing device 10 including an IP address of 201.123.123.123, the second mapping information MI_2 consists of identifier information PI_1 of one second information processing device 40 arranged at a first area LI_1, and identifier information PI_2 of one second information processing device 40 arranged at a first area LI_2. A database for storing the mapping information MI therein may include a hierarchical database, a network data, a relative database, an object-oriented database, or a combination thereof. However, the inventive concept is not limited thereto.

Referring back to FIG. 2, according to embodiments, the mapping server 50 may further include a service providing unit 55 for providing data, such as messages, information, games, multimedia contents, and advertisements, to the first information processing device 10 and the second information processing device 40 and processing services corresponding to demands, such as forwarding and sharing of data, between the first information processing device 10 and the second information processing device 40. The service providing unit 55 is not limited to a case in which the mapping server 50 directly provides services to the first information processing device 10 and the second information processing device 40 and may provide a gate or information for accessing a server or a cloud system providing other services. The service providing unit 55 may be a combination of software and an information processing device, such as a microprocessor.

The mapping unit 51 and the service providing unit 55 of the mapping server 50 may be embodied as one or more hardware devices for performing operations according to embodiments or software including commands for performing the operations. Furthermore, the mapping unit 51, the database unit 53, and the service providing unit 55 may be respectively executed by physically independent microprocessors and/or software or may be configured to share parts of or the entire microprocessors and/or software. Furthermore, the mapping server 50 may be a centralized system, a distributed system with distributed resources, or a cloud system.

As described above, when a link is established between the first information processing device 10 and the second information processing device 40 on the display area DA, an intuitive interface may be formed between the display unit 11 and the second information processing device 40. A user may operate a device application or forward or share electronic data stored in the second information processing device 40, e.g., information, messages, multimedia contents, etc., to or with the first information processing device 10 via the device application. In this case, shared ata may be displayed on the display area DA. On the contrary, a user may operate a computer application or forward or share data stored in the first information processing device 10 to a mobile display device via the computer application. Furthermore, if a plurality of second information processing devices 40 are arranged on the display area DA, data may be forwarded or shared between the second information processing devices 40.

According to embodiments, if the display unit 11 includes a touch-screen interface, more convenient and newer user experiences may be provided via touch events. For example, in case of a restaurant, when a menu list is displayed at the display area DA, a user may select a food by touching the corresponding food in the menu list. Next, when the user drags from an area in which the corresponding food or a calculated total price is displayed to or a call area at which the user's second information processing device is located or clicks the call area, it is recognized that the user is making payment via the user's second information processing device, and thus an electronic payment service for the user may be initiated.

An electronic payment service may be provided in combination with various other services, such as coupons. For another example, data to be shared may be activated at the display area DA of the second information processing device 40 and the data may be transmitted or shared by dragging from a call area CA at which the second information processing device 40 is located to another call area CA at which another device to be received the data is located. The above-stated operations are merely examples, and various activities that may be performed on a table, such as message transmissions/receptions, electronic payments, exchanging and sharing data like contents data, games, educations, lectures, and conferences, may be electronically performed between the second information processing device 40, the first information processing device 10, and/or the other second information processing device 40 without a complex network setup, where locations of the information processing devices are recognized.

As described above, device call signals are generated at particular areas in the display area DA, the second information processing device 40 located on the display area DA recognizes the device call signals, and the first information processing device 10 controlling the display unit 11 and the second information processing device 40 are mapped and linked to each other on a network. Therefore, the mapping server 50 and the mapping system 100 may provide to embody connection and data communication between the first information processing device 10 and the second information processing device 40 by using in a simple and new manner as mentioned above.

Furthermore, new user experiences may be provided by embodying various information processing processes between information displayed on the display area DA and the second information processing device 40 via recognition of location of the second information processing device 40 on the display area DA and a sensor for recognizing a touch input of a user or a contactless recognition.

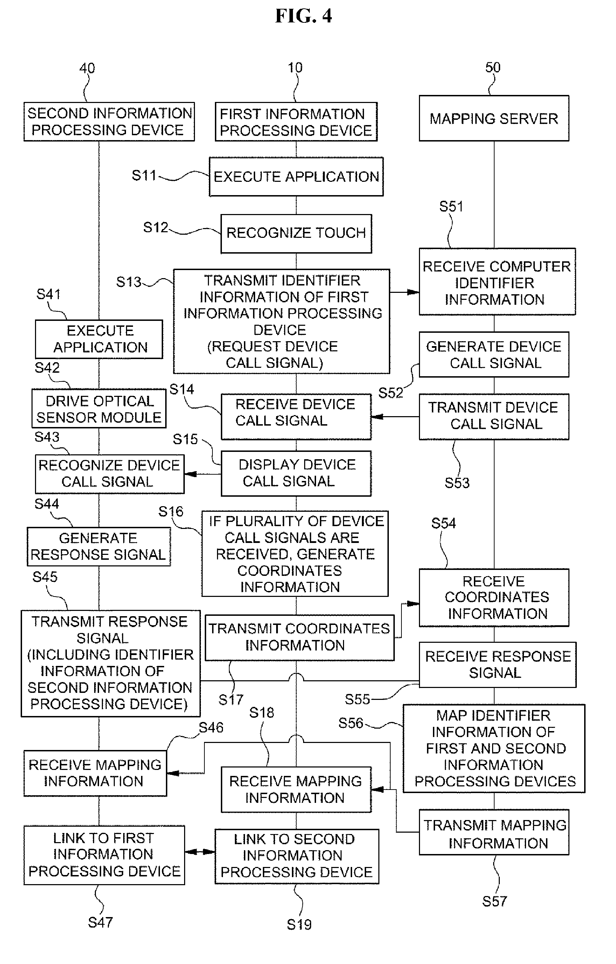

FIG. 4 is a flowchart showing a mapping method in a mapping system according to an embodiment.

Referring to FIG. 4, the computer application 31 installed at the first information processing device 10 is executed (operation S11). When the computer application 31 is executed, the first information processing device 10 may start a standby mode for monitoring a touch input to the display unit 11, without a particular input therefor. The device application 41 installed at the second information processing device 40 possessed by a user may also be executed (operation S41). When the device application 41 is executed, the second information processing device 40 may operate the optical sensor module 45 and initiate a standby mode for detecting a device call signal (operation S42).

When the user puts the second information processing device 40 on the display area DA of the first information processing device 10, the first information processing device 10 recognizes a touch of the second information processing device 40 (operation S12). Next, the first information processing device 10 transmits identifier information of the first information processing device 10 to the mapping server 50, together with a request for a device call signal (operation S13). The identifier information of the first information processing device 10 may include unique identification information, e.g., an IP address, for identifying the first information processing device 10 on a network. According to another embodiment, when the computer application 31 is executed, log-in process for mapping server 50 may be performed by transmitting to the mapping server 50 virtual information like log-in information including an ID and a password and corresponding identifier information.

The mapping server 50, which is connected to the first information processing device 10 on the network 60, receives a request for a device call signal and identifier information of the first information processing device 10 (operation S51). The mapping server 50 generates a device call signal (operation S52). According to another embodiment, the first information processing device 10 may generate a device call signal and transmit the device call signal to the mapping server 50, together with identifier information of the first information processing device 10.

Next, the mapping server 50 transmits the generated device call signal to the first information processing device 10 having the IP address included in the identifier information of the first information processing device 10 (operation S53). The first information processing device 10 may receive the device call signal from the mapping server 50 (operation S14). If the first information processing device 10 generates a device call signal, the operations S53 and S14 may be omitted.

A device call signal generated by the mapping server 50 or the first information processing device 10 include color information displayed at a call area CA, and the second information processing device 40 recognizes the color information. The color information may include a single color or color sequence information in which a plurality of colors are sequentially changed.

The first information processing device 10 forms a sufficiently large call area CA at the display area DA on which the second information processing device 40 is placed and displays a device call signal at the call area CA (operation S15). Based on a color sequence of the device call signal, colors may be displayed in an order of 'red-green-blue,' for example. Between the colors, black color or white color may be displayed, so that the color sequence may be seen as if it flickers.

The second information processing device 40 recognizes a device call signal via an optical sensor module CM (operation S43). For the second information processing device 40 to recognize a device call signal displayed at the call area CA, it is necessary for a user to let a surface of the second information processing device 40 on which the optical sensor module CM is located, e.g., the rear surface, to face the display area DA. as described above, the device application 41 may detect and analyze color information of a picked up image for recognizing a device call signal. Next, the second information processing device 40 generates a response signal corresponding to the device call signal (operation S44). The second information processing device 40 transmits a response signal including identifier information of the second information processing device 40 to the mapping server 50 (operation S45). The device application 41 may transmit color information regarding a color information detected from an image to the mapping server 50 as a response signal corresponding to recognition of a device call signal. The mapping server 50 receives a response signal from the second information processing device 40 (operation S55). The mapping server 50 may read out identifier information of the second information processing device 40 included in the response signal.

According to embodiments, if it is necessary for the first information processing device 10 to be linked to a plurality of second information processing devices, the first information processing device 10 may request a plurality of device call signals to the mapping server 50 or may generate a plurality of device call signals and, if necessary, may further generate coordinate information (operation S16). The coordinate information may be actual coordinates on a 2D plane or codes to be recognized by the first information processing device 10 and the mapping server 50. The first information processing device 10 transmits coordinate information regarding the call area CA displaying a device call signal to the mapping server 50 (operation S17). The mapping server 50 may receive coordinate information from the first information processing device 10 (operation S54).

The mapping server 50 maps identifier information of the first information processing device 10 and identifier information of the second information processing device 40 to each other (operation S56). The mapping unit 51 may map identifier information of the first information processing device 10, identifier information of the second information processing device 40, and, selectively, coordinate information to one another and store mapping information in the database unit 53.

The mapping server 50 transmits mapping information to the first information processing device 10 and/or the second information processing device 40 (operation S57). The first information processing device 10 and/or the second information processing device 40 receive(s) the mapping information (operation S18 and S46). The first information processing device 10 and the second information processing device 40 are linked to each other on the display area DA based on the mapping information (operation S19). In the same regard, the second information processing device 40 is linked to the first information processing device 10 (operation S47). On the network, the second information processing device 40 may be connected to the display area DA via a mobile communication network, whereas the first information processing device 10 may be connected to the display area DA via a close-distance communication network. That is, the first information processing device 10 and the second information processing device 40 which are used heterogeneous networks are linked to each other through the mapping server 50. As described above, the second information processing device 40 and the first information processing device 10, which are linked to each other, may be performed various services, such as sharing and forwarding of messages, documents, and multimedia contents, electronic trades, games, and data processing may be performed therebetween, where data transmission therefor may be performed in various forms, such as files, packets, and streams.

As described above, the mapping server 50 may be included in the first information processing device 10. When the mapping server 50 is included in the first information processing device 10, no wire/wireless communication network between the first information processing device 10 and the mapping server 50 is necessary. Furthermore, the mapping server 50 may be connected to the second information processing device 40 via a close-distance communication network instead of a mobile communication network. When the mapping server 50 and the second information processing device 40 are connected to each other via a close-distance communication network, only the second information processing device 40 authenticated within a particular space may transmit/receive data to/from the first information processing device 10, and thus security may be further improved.

The first information processing device 10, the second information processing device 40, and the mapping server 50 may be easily applied to any of various locations requiring mutual data transmissions. For example, the first information processing device 10 may be a table including the display unit 11, an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, a furniture, a window, or a wall surface, whereas the second information processing device 40 may be a small mobile communication device that may be easily carried by a user, e.g., a mobile computing device, such as a mobile phones, a net-book , a tablet PC, an e-book terminal, and a laptop PC.

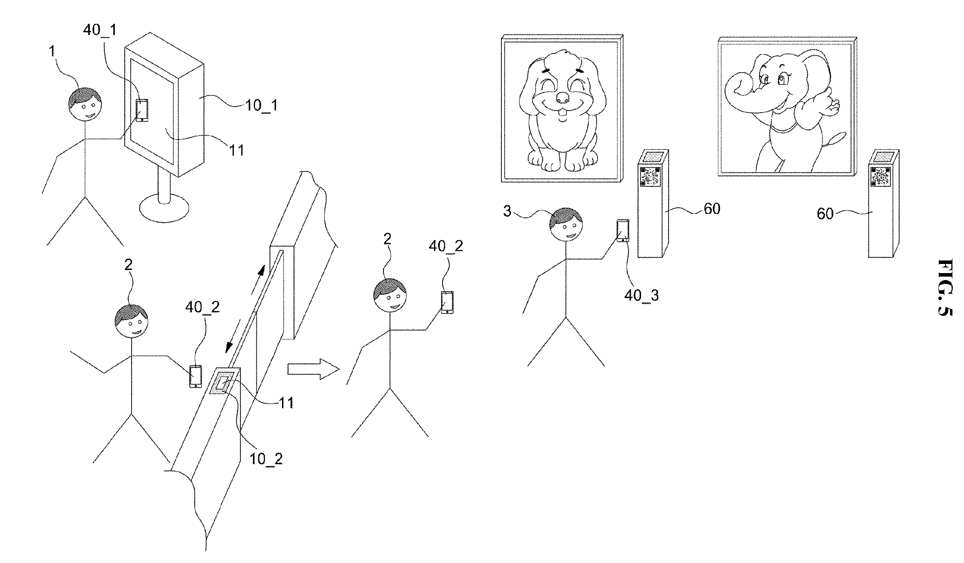

FIG. 5 is a perspective view of a first information processing device and a second information processing device according to another embodiment.

Referring to FIG. 5, a first information processing device according to an embodiment may be a kiosk 10_1, which has a display unit, is installed at a public location, and provides information, such as various administrative processes, product/article/work information, facility instructions, sightseeing information of a surrounding area, via a touch-screen interface. A second information processing device to be mapped to the kiosk 10_1 may be a smart phone 40_1.

A user 1 may bring an optical sensor module CM of the smart phone 40_1 close to a surface of the kiosk 10_1 within a focal distance or contact the optical sensor module CM of the smart phone 40_1 to the surface of the kiosk 10_1, thereby receiving a device call signal displayed at the display unit 11 of the kiosk 10_1 and transmit a response signal corresponding thereto. A mapping server (not shown) on a network may receive the device call signal and the response signal and maps the device call signal and the response signal, thereby linking the kiosk 10_1 and the smart phone 40_1 to each other. Therefore, the user 1 may download various electronic data displayed at the display unit 11 of the kiosk 10_1 or upload electronic data in the smart phone 40_1 to the kiosk 10_1. For example, if the kiosk 10_1 is a system for providing museum information, the user 1 may receive a museum map or an exhibition schedule provided by the kiosk 10_1 via the smart phone 40_1. If the kiosk 10_1 includes a coupon or ticket issuing unit, a coupon or a ticket may be transmitted from the kiosk 10_1 to the smart phone 40_1.

Furthermore, according to another embodiment, the kiosk 10_1 may be a POS system. In this case, the linked smart phone 40_1 transmits one or more credit information from among card information, account information, and a password to the POS system and, when a payment is completed, information including a cookie indicating completion of the payment may be received from the POS system via a display unit. However, the above-stated cases are merely examples, and the inventive concept is not limited thereto.

According to another embodiment, the first information processing device may be an authentication system 10_2 having a display unit. The authentication system 10_2 may be installed at an entrance door, for example. The second information processing device may be an electronic key for authenticating entry authorization via the authentication system 10_2 or a smart phone 40_2 that functions as an electronic key. For example, if the smart phone 40_2 downloads a ticket via the POS system of the kiosk 10_1, the smart phone 40_2 may be authorized for entry.

A user 2 may bring an optical sensor module CM of the entry-authorized smart phone 40_2 close to a surface of the authentication system 10_2, thereby receiving a displayed device call signal and transmitting information regarding entry authorization as a response signal. Therefore, the authentication system 10_2 and the smart phone 40_2 are mapped to each other, and a suitable follow-up command may be carried out. For example, the authentication system 10_2 may open an entrance door based on a response signal from the smart phone 40_2.

A user 3 possessing an authorized smart phone 40_3 may access various information processing devices controlled by authentication system 10_2 or connected to the authentication system 10_2 via a network. For example, , the authorized smart phone 40_3 authorized as described above may share data or information with an information providing unit inside a museum, which is connected to the authentication system 10_2, and may easily access a storage unit for providing descriptions of works by recognizing tags, such as a barcode, a QR code, and an near field communication (NFC) 60, indicating respective works. If the storage unit is only allowed to be accessed by the smart phone 40_3 authenticated by the authentication system 10_2, security of information stored therein may be maintained to the smart phone 40_3

The above embodiment relates to a particular location (a museum), an authentication system (first information processing device), and a smart phone (second information processing device). However, the inventive concept is not limited thereto. It will be obvious to one of ordinary skill in the art that the inventive concept may also be applied to other public locations, such as an exhibition hall, a conference hall, a concert hall, a movie theater, a corporate exhibition hall, an offline market, a hospital, a train station, a subway station, a bus stop, and an airport, regarding forwarding, sharing, exchanging, and executing pictures, music, documents, advertisements, databases, coupons, product descriptions, maps, electronic currencies, product purchase information, payment information, web link information, entry authorization information, security information, and software applications that are groups of arbitrary commands to be executed by the first or the other second information processing device.

Furthermore, according to an embodiment, a popular and general device with minimum required performance, such as a smart phone including an optical sensor module and network function, may be not only used for exchange, forwarding, and/or sharing of electronic data required at a particular location, but also be used for authentication services, such as authentication of a possessor of the device or an authentication required for the device by adding new information, such as authentication information or qualification information.

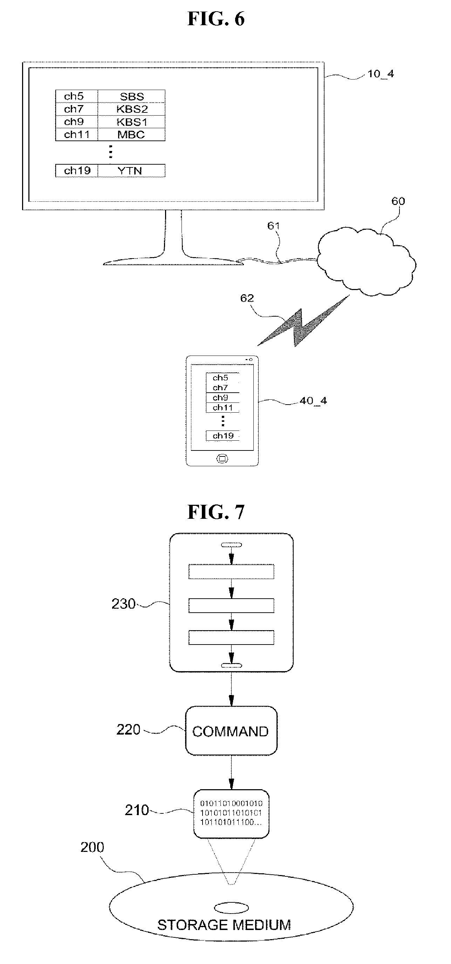

FIG. 6 is a perspective view of a first information processing device and a second information processing device according to another embodiment.

Referring to FIG. 6, the first information processing device is a smart TV 10_4, whereas the second information processing device is a tablet PC 40_4. The smart TV 10_4 and the tablet PC 40_4 may be connected to the first and second networks 61 and 62, respectively. The first and second networks 61 and 62 may be a same type of networks or different types of networks, and the first and second networks 61 and 62 may be wire networks, wireless networks, or a combination thereof.

As described above with reference to FIGS. 1A through 4, the smart TV 10_4 and the tablet PC 40_4 may be mapped by a mapping server (not shown) based on a device call signal displayed on a display unit of the smart TV 10_4 and a response signal of the tablet PC 40_4 corresponding to the device call signal, and, after the smart TV 10_4 and the tablet PC 40_4 are mapped to each other, the smart TV 10_4 and the tablet PC 40_4 may be paired to each other via a network. Via the pairing, forwarding, sharing, and exchanging of data, remote controlling, or designated commands executable by the smart TV 10_4 or the tablet PC 40_4 may be carried out between the smart TV 10_4 and the tablet PC 40_4. For example, a user may perform operations including remote control, channel change, volume control, multimedia data transmission, and screen sharing regarding the smart TV 10_4 by using the paired tablet PC 40_4. Furthermore, based on broadcasting contents provided by the smart TV 10_4, an interactive interface for enjoying the broadcasting contents may be provided via the paired tablet PC 40_4. For example, if a user drags product information displayed on the display unit of the smart TV 10_4 by using the tablet PC 40_4, the corresponding product may be purchased or saved in a shopping cart.

The above embodiment relates to a smart TV and a tablet PC. However, it will be obvious to one of ordinary skill in the art that the present embodiment may be modified to pairings between a PC and a computer peripheral device, such as a scanner, a printer, a keyboard, a mouse, a laser pointer, a USB memory, and an external storage device, or between tablet PCs or smart phones. Furthermore, the inventive concept may also be applied to home electronic devices to which a display unit may be or is already installed, such as a table, an electronic blackboard, a signboard, an electronic picture frame, an e-book, a tablet PC, a smart TV, a refrigerator, an electric range, an induction range, and an oven; a building management system or a home networking system; a navigation system or an intelligence car system; or a smart grid system. Based on pairings according to an embodiment, user input system of such devices may be expanded or become interactive and intellectualized.

Although mapping and/or linking between a single first information processing device and a single or a plurality of second information processing devices are described above, those are merely examples, and the inventive concept is not limited thereto. For example, a many-to-many link may also be established between a plurality of first information processing devices and a plurality of second information processing devices. To this end, a mapping server may establish connections between the first information processing devices and linking the second information processing devices to the respective first information processing devices, thereby establishing a many-to-many link between the first information processing devices and the second information processing devices. Furthermore, one-to-one links or many-to-many links between a plurality of first information processing devices and a plurality of second information processing devices may also be established. To this end, each of the plurality of first information processing devices or the plurality of second information processing devices may include both a display area and an optical sensor module.

FIG. 7 is a diagram showing a computer-readable storage medium 200 according to an embodiment.

Referring to FIG. 7, the computer-readable storage medium 200 may include a mapping method 230 disclosed in the present specification and data 210 encoded from commands 220 for embodying a mapping system. Examples of the commands include not only machine language codes generated by a compiler, but also high-level language codes that may be executed by a computer using an interpreter.

The computer-readable storage medium 200 may be a non-volatile memory device, such as a RAM, a ROM, an EEPROM, and a flash memory, a CD-ROM, a DVD-ROM, a hard disk, an optical or holographic medium, a magnetic tape, or a solid-state disk (SSD) device. However, the above-stated media are merely examples, and the inventive concept is not limited thereto.

The above-stated embodiments of the inventive concept may be implemented in the form of the methods, the systems, or the storage media to produce software, firmware, hardware, products, or a combination thereof (e.g., a cloud computing environment) by using programming and/or engineering techniques, where the products may include computer programs, carrier waves, or media.

## Claims

1. An information processing device comprising:
a display unit; and
a control unit controlling the display unit to display a device call signal including color information displayed at a part of or the entire display unit and being connected to a first network,
wherein, in response to the device call signal recognized as another information processing device connected to a second network same as or different from the first network and including an optical sensor module for receiving the device call signal contacts the display unit, the information processing device transmits a response signal via the second network and, when the information processing device is mapped to the other information processing device, the information processing device carries out a command based on the response signal.

2. The information processing device of claim 1, wherein the information processing device or the other information processing device is a table an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, a furniture, a window, a wall surface, or a combination thereof.

3. The information processing device of claim 1, wherein the command based on the response signal comprises at least one from among transmission/reception, forwarding, exchange, and sharing of electronic data between the information processing device and the other second information processing device, forwarding, exchanging, sharing, and paring of data including information regarding trading, making payment, web linking, authentication, security, electronic currencies, product descriptions, advertisements, games, downloading coupons, parings, authorization managements, opening/closing an entrance door, switching power, adjustment of the brightness of a light, power managements, controlling a motor, command scripts, executing an application to be executed by the information processing device or the other information processing device, or a combination thereof.

4. The information processing device of claim 3, wherein the electronic data comprises at least one from among data, messages, images, music, motion pictures, documents, databases, coupons, product descriptions, maps, electronic currencies, product purchase information, payment information, web link information, authentication information, security information, advertisement information, game information, software applications that are groups of arbitrary commands to be executed by the information processing device or the other information processing device, and combinations thereof.

5. The information processing device of claim 1, wherein the command based on the response signal is carried out by using a communication protocol comprising at least one from among hyper text transfer protocol (http), hyper text transfer protocol over secure socket layer (https), and TCP/IP.

6. The information processing device of claim 1, wherein the display unit comprises at least one of a touch-screen interface and a contactless interface, and
the contactless interface comprises at least one of a bio-signal sensor and a motion sensor.

7. The information processing device of claim 1, wherein each of the first and second networks is one from among a close-distance wire/wireless communication network, a remote wire/wireless communication network, an internet network, and a mobile communication network.

8. The information processing device of claim 1, wherein the color information comprises color sequence information including a plurality of sequentially changing colors.

9. The information processing device of claim 8, wherein, in the color sequence information, a preceding color and a following color have different contrast ratios.

10. The information processing device of claim 1, wherein the device call signal further comprises identifier information of the information processing device, and
the identifier information comprises one from among an internet protocol (IP) address, a media access control (MAC) address, a modem serial number, a serial number of a network device, a serial number of a system board, an e-mail address, user identification information (e.g., a passport number of a residence number), a password, a phone number, a location-based information, such as geographic information and communication cell information, a unique device ID (UDID), a hardware model name, characters and/or numbers based on a combination thereof or a combination of the characters and the numbers, or information encoded therefrom

11. An information processing device comprising an optical sensor module for recognizing a device call signal including color information displayed at a part of or an entire display unit of another information processing device and being connected to a first network,
wherein the information processing device recognizes the device call signal displayed by the other information processing device connected to a second network same as or different from the first network via the optical sensor module and transmits a response signal corresponding to the device call signal via the first network, and,
when the information processing device is mapped to the other information processing device, the information processing device carries out a command based on the response signal.

12. The information processing device of claim 11, wherein the information processing device or the other information processing device is a table an electronic whiteboard, a signboard, an electronic picture frame, an e-book, a tablet PC, a smart TV, an advertisement board, a kiosk, a point-of-sales (POS) system, a coupon printer, an exhibition information terminal, a subway ticket machine, a computer, a desktop computer, a laptop computer, a smart phone, a smart pad, a computer peripheral device, an electronic device, an intelligent home and building control system, an intelligent vehicle information system, an entry security system, an authentication system, a navigation device, a furniture, a window, a wall surface, or a combination thereof.

13. The information processing device of claim 11, wherein the command based on the response signal comprises at least one from among transmission/reception, forwarding, exchange, and sharing of electronic data between the information processing device and the other second information processing device, forwarding, exchanging, sharing, and paring of data including information regarding trading, making payment, web linking, authentication, security, electronic currencies, product descriptions, advertisements, games, downloading coupons, parings, authorization managements, opening/closing an entrance door, switching power, adjustment of the brightness of a light, power managements, controlling a motor, command scripts, executing an application to be executed by the information processing device or the other information processing device, or a combination thereof.

14. The information processing device of claim 13, wherein the electronic data comprises at least one from among data, messages, images, music, motion pictures, documents, databases, coupons, product descriptions, maps, electronic currencies, product purchase information, payment information, web link information, authentication information, security information, advertisement information, game information, software applications that are groups of arbitrary commands to be executed by the information processing device or the other information processing device, and combinations thereof.

15. The information processing device of claim 11, wherein the command based on the response signal is carried out by using a communication protocol comprising at least one from among hyper text transfer protocol (http), hyper text transfer protocol over secure socket layer (https), and TCP/IP.

16. The information processing device of claim 11, wherein the optical sensor module receives the device call signal by approaching to the display area within a focal distance or contacting the display area.

17. The information processing device of claim 16, wherein the optical sensor module is arranged at at least one between the front surface and the rear surface of the information processing device.

18. The information processing device of claim 11, wherein the device call signal further comprises identifier information of the information processing device, and
the identifier information comprises one from among an internet protocol (IP) address, a media access control (MAC) address, a modem serial number, a serial number of a network device, a serial number of a system board, an e-mail address, user identification information (e.g., a passport number of a residence number), a password, a phone number, a location-based information, such as geographic information and communication cell information, a unique device ID (UDID), a hardware model name, characters and/or numbers based on a combination thereof or a combination of the characters and the numbers, or information encoded therefrom

19. A data processing system comprising:
a first information processing device comprising a display unit and a control unit controlling the display unit to display a device call signal including color information displayed at a part of or the entire display unit and being connected to a first network;
a second information processing device being connected to a first network, comprising an optical sensor module for recognizing the device call signal, and transmits a response signal via the second network in response to the device call signal recognized by contacting the display unit; and
a mapping server linking the first information processing device and the second information processing device on the first and second networks by mapping the device call signal and the response signal to each other,
wherein, when the first and second information processing devices are linked by the mapping server, at least one of the first and second information processing devices carry out a follow-up command.

20. The data processing system of claim 19, wherein the mapping server is included in the first information processing device or is a device independent from the first information processing device.

21. The data processing system of claim 19, wherein the optical sensor module receives the device call signal by approaching to the display area within a focal distance or contacting the display area.

22. The data processing system of claim 19, wherein, when the first information processing device is linked to a plurality of second information processing devices, at least one from among exchange, sharing, transmission/reception, and forwarding of electronic data is performed between the plurality of second information processing devices.

23. The information processing device of claim 19, wherein a relationship between the first and second information processing devices is a relationship between main device and an auxiliary device, a relationship between a master and a slave, a relationship between a server or a client, or an equal relationship.

24. A data processing method comprising:
displaying a device call signal including color information displayed at a part of or the entire display unit of a first information processing device connected to a first network;
receiving the device call signal by contacting an optical sensor module CM of a second information processing device connected to a second network same as or different from the first network and transmitting a response signal corresponding to the device call signal via the second network;
linking the first information processing device and the second information processing device to each other on the first and second networks by mapping the device call signal and the response signal to each other; and
carrying out follow-up commands at the first information processing device and/or the second information processing device based on the response signal.

25. The data processing method of claim 24, wherein the optical sensor module receives the device call signal by approaching to the display area within a focal distance or contacting the display area.

26. The data processing method of claim 24, wherein, when the first information processing device is linked to a plurality of second information processing devices, at least one from among exchange, sharing, transmission/reception, and forwarding of electronic data is performed between the plurality of second information processing devices.

27. A data processing method comprising:
displaying a device call signal including color information displayed at a part of or the entire display unit controlled by an information processing device; and
transmitting a response signal corresponding to the device call signal recognized as another information processing device including an optical sensor module for receiving the device call signal approaches to or contacts the display unit and, when the information processing device is mapped to the other information processing device based on the device call signal and the response signal, carrying out follow-up commands,
wherein the information processing device is connected to a first network, and
the other information processing device is connected to a second network same as or different from the first network.

28. The data processing method of claim 27, wherein, in the carrying out of the follow-up command, at least one from among transmission/reception, forwarding, exchange, and sharing of electronic data between the information processing device and the other second information processing device, forwarding, exchanging, sharing, and paring of data including information regarding trading, making payment, web linking, authentication, security, electronic currencies, product descriptions, advertisements, games, downloading coupons, parings, authorization managements, opening/closing an entrance door, switching power, adjustment of the brightness of a light, power managements, controlling a motor, command scripts, executing an application to be executed by the information processing device or the other information processing device, or a combination thereof is carried out.

29. The data processing method of claim 27, wherein the command based on the response signal is carried out by using a communication protocol comprising at least one from among hyper text transfer protocol (http), hyper text transfer protocol over secure socket layer (https), and TCP/IP.

30. A data processing method comprising:
recognizing a device call signal displayed at a part of or the entire display unit of another information processing device;
transmitting a response signal corresponding to the device call signal via a first network; and,
when mapped to the other information processing device based on the device call signal and the response signal, carrying out a follow-up command based on the response signal,
wherein the other information processing device is connected to a second network same as or different from the first network.

31. The data processing method of claim 30, wherein the optical sensor module receives the device call signal by approaching to the display area within a focal distance or contacting the display area.

32. The data processing method of claim 30, wherein, in the carrying out of the follow-up command, at least one from among transmission/reception, forwarding, exchange, and sharing of electronic data between the information processing device and the other second information processing device, forwarding, exchanging, sharing, and paring of data including information regarding trading, making payment, web linking, authentication, security, electronic currencies, product descriptions, advertisements, games, downloading coupons, parings, authorization managements, opening/closing an entrance door, switching power, adjustment of the brightness of a light, power managements, controlling a motor, command scripts, executing an application to be executed by the information processing device or the other information processing device, or a combination thereof is carried out.
